# EUROPEAN PATENT APPLICATION

(11) **EP 4 474 936 A1**
(43) Date of publication of application: **11.12.2024**
(21) Application number: 22933944.5
(22) Date of filing: 28.03.2022
(51) Int. Cl.: G05D 1/12

(54) **METHOD AND APPARATUS FOR CONTROLLING UNMANNED AERIAL VEHICLE, UNMANNED AERIAL VEHICLE, AND STORAGE MEDIUM**

(71) Applicant: SZ DJI Technology Co., Ltd., Shenzhen, Guangdong 518057 (CN)
(72) Inventor: WU, Qifeng, Shenzhen, Guangdong 518057 (CN); SU, Xing, Shenzhen, Guangdong 518057 (CN); XU, Zhongyan, Shenzhen, Guangdong 518057 (CN)
(74) Representative: Appelt, Christian W.
(86) International application number: PCT/CN2022/083379
(87) International publication number: WO 2023/184086

(57) **Abstract**

Embodiments of the present invention disclose a control method and apparatus for an unmanned aerial vehicle, an unmanned aerial vehicle, and a storage medium. The method includes: during a process of tracking a target object by the unmanned aerial vehicle, obtaining a distance between the target object and the unmanned aerial vehicle; and controlling, when the distance is greater than a preset distance threshold, the unmanned aerial vehicle to stop tracking the target object. In this way, when tracking the target object, the unmanned aerial vehicle can determine whether to stop tracking the target object, based on the distance between the unmanned aerial vehicle and the target object, thereby ensuring the flight safety of the unmanned aerial vehicle.

## Description

### Technical Field

Embodiments of the present invention relate to the field of electronic control technologies, and in particular, to a control method and apparatus for an unmanned aerial vehicle, an unmanned aerial vehicle, and a storage medium.

### Background Art

Currently, an unmanned aerial vehicle can provide a function of tracking a target object (such as a person, a vehicle, a ship, or an animal), that is, the unmanned aerial vehicle can adjust its position based on movement of the target object to follow the movement of the target object. Currently, mainstream tracking functions provided by unmanned aerial vehicles are classified into two types: a visual tracking method and a tracking method based on a satellite positioning apparatus. The visual tracking method is to track a target object by adjusting a flight position of an unmanned aerial vehicle based on an image of the target object that is output by a photographing apparatus configured on the unmanned aerial vehicle. The tracking method based on a satellite positioning apparatus is to track a target object by adjusting a flight position of an unmanned aerial vehicle based on a position that is acquired by the satellite positioning apparatus and that is sent by a device (such as an electronic positioning tag apparatus or a control terminal of the unmanned aerial vehicle) carried by the target object and including the satellite positioning apparatus.

However, when a user uses the tracking function of the unmanned aerial vehicle, there may be some safety risks in some specific scenarios. For example, when the unmanned aerial vehicle is far away from a tracked target object, an area of the target object in an image acquired by the photographing apparatus of the unmanned aerial vehicle may become very small. Therefore, it is difficult for the unmanned aerial vehicle to accurately calculate a relative position relationship between the target object and the unmanned aerial vehicle, which further seriously affects control accuracy of the flight position of the unmanned aerial vehicle. In addition, when the unmanned aerial vehicle is far away from the tracked target object, a position that is acquired by the satellite positioning apparatus and that is sent by a terminal device may not be received by the unmanned aerial vehicle continuously or in a timely manner. Therefore, it is difficult for the unmanned aerial vehicle to calculate an accurate relative position relationship between the target object and the unmanned aerial vehicle, which further seriously affects the control accuracy of the flight position of the unmanned aerial vehicle. The situations described above may lead to a flight accident during tracking.

### Summary of the Invention

Embodiments of the present invention provide a control method and apparatus for an unmanned aerial vehicle, an unmanned aerial vehicle, and a storage medium, to improve the flight safety of the unmanned aerial vehicle when tracking a target object and prevent the occurrence of a flight accident.

A first aspect of the present invention is to provide a control method for an unmanned aerial vehicle. The method includes:
during a process of tracking a target object by the unmanned aerial vehicle, obtaining a distance between the target object and the unmanned aerial vehicle; and
controlling, when the distance is greater than a preset distance threshold, the unmanned aerial vehicle to stop tracking the target object.

A second aspect of the present invention is to provide a control apparatus for an unmanned aerial vehicle. The control apparatus includes a memory and a processor.

The memory is configured to store program code.

The processor is configured to call and execute the program code to perform the following steps:
during a process of tracking a target object by the unmanned aerial vehicle, obtaining a distance between the target object and the unmanned aerial vehicle; and
controlling, when the distance is greater than a preset distance threshold, the unmanned aerial vehicle to stop tracking the target object.

A third aspect of the present invention is to provide an unmanned aerial vehicle, including the control apparatus for an unmanned aerial vehicle according to the second aspect as described above.

A fourth aspect of the present invention is to provide a computer-readable storage medium. The storage medium is a computer-readable storage medium having stored therein program instructions that are used for the control method for an unmanned aerial vehicle according to the first aspect.

In the control method and apparatus for an unmanned aerial vehicle, the unmanned aerial vehicle, and the storage medium provided in the embodiments of the present invention, the distance between the target object and the unmanned aerial vehicle is obtained, and when the distance is greater than the preset distance threshold, the unmanned aerial vehicle is controlled to stop tracking the target object. In this way, during the process of tracking the target object by the unmanned aerial vehicle, the unmanned aerial vehicle is prevented from tracking the target object with a poor control accuracy of a flight position, which can improve the flight safety of the unmanned aerial vehicle in tracking the target object, and prevent the occurrence of a flight accident.

### Brief Description of the Drawings

The accompanying drawings described herein are intended to provide a further understanding of the present application, and form a part of the present application. The illustrative embodiments of the present application and the description thereof are for explaining the present application and do not unduly limit the present application. In the accompanying drawings:
FIG. 1 is a schematic flowchart of a control method for an unmanned aerial vehicle according to an embodiment of the present invention;
FIG. 2 is a schematic diagram illustrating that an unmanned aerial vehicle tracks a target object according to an embodiment of the present invention;
FIG. 3 is a schematic diagram illustrating that an unmanned aerial vehicle tracks a target object according to another embodiment of the present invention;
FIG. 4 is a schematic structure diagram of a control apparatus for an unmanned aerial vehicle according to an embodiment of the present invention; and
FIG. 5 is a schematic structure diagram of an unmanned aerial vehicle according to an embodiment of the present invention.

### Detailed Description of Embodiments

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the embodiments described are some rather than all of the embodiments of the present invention. All other embodiments obtained by a person of ordinary skill in the art based on the embodiments of the present invention without creative efforts shall fall within the scope of protection of the present invention.

Unless otherwise defined, all technical and scientific terms used herein have the same meaning as commonly understood by one of ordinary skill in the art to which this invention belongs. The terms used in the description of the present invention are for the purpose of describing particular embodiments and are not intended to limit the present invention.

To facilitate understanding of the technical solutions and technical effects of the present application, the prior art is briefly described below.

Currently, an unmanned aerial vehicle can provide a function of tracking a target object (such as a person, a vehicle, a ship, or an animal), that is, the unmanned aerial vehicle can adjust its position based on movement of the target object to follow the movement of the target object. Currently, mainstream tracking functions provided by unmanned aerial vehicles are divided into two types: visual tracking and tracking based on a satellite positioning apparatus. The visual tracking method is to track a target object by adjusting a flight position of an unmanned aerial vehicle based on an image of the target object that is output by a photographing apparatus configured on the unmanned aerial vehicle. The tracking method based on a satellite positioning apparatus is to track a target object by adjusting a flight position of an unmanned aerial vehicle based on a position that is acquired by the satellite positioning apparatus and that is sent by a device (such as an electronic positioning tag apparatus or a control terminal of the unmanned aerial vehicle) carried by the target object and including the satellite positioning apparatus.

However, when a user uses the tracking function of the unmanned aerial vehicle, there may be some safety risks in some specific scenarios. For example, when the unmanned aerial vehicle is far away from a tracked target object, an area of the target object in an image acquired by the photographing apparatus of the unmanned aerial vehicle may become very small. Therefore, it is difficult for the unmanned aerial vehicle to accurately calculate a relative position relationship between the target object and the unmanned aerial vehicle, which further seriously affects control accuracy of the flight position of the unmanned aerial vehicle. In addition, when the unmanned aerial vehicle is far away from the tracked target object, a position that is acquired by the satellite positioning apparatus and that is sent by a terminal device may not be received by the unmanned aerial vehicle continuously or in a timely manner. Therefore, it is difficult for the unmanned aerial vehicle to calculate an accurate relative position relationship between the target object and the unmanned aerial vehicle, which further seriously affects the control accuracy of the flight position of the unmanned aerial vehicle. The situations described above may lead to a flight accident during tracking.

To solve the above technical problems, some of the implementations of the present invention are described in detail below with reference to the accompanying drawings. The embodiments described below and the features in the embodiments may be combined with each other if there is no conflict between various embodiments.

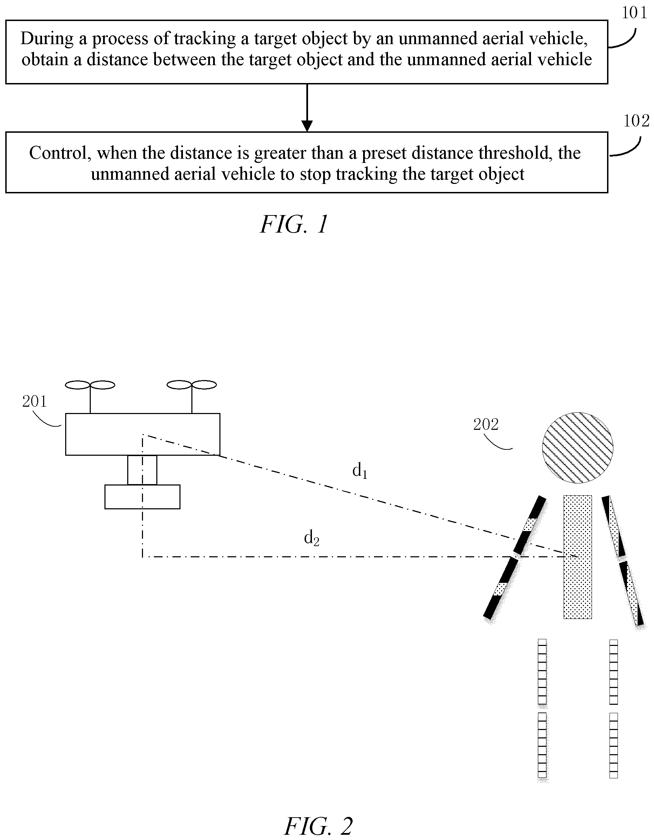

As shown in FIG. 1, an embodiment of the present invention provides a control method for an unmanned aerial vehicle, where the method may be performed by a control apparatus for an unmanned aerial vehicle. In some cases, the unmanned aerial vehicle may include the control apparatus, and the unmanned aerial vehicle may perform the control method for an unmanned aerial vehicle. In some cases, the control device for an unmanned aerial vehicle is provided in a device that is communicatively connected to the unmanned aerial vehicle. For example, the control device may be provided in a control terminal of the unmanned aerial vehicle, that is, the control terminal of the unmanned aerial vehicle includes the control apparatus for an unmanned aerial vehicle. The control terminal of the unmanned aerial vehicle may establish a wireless communication connection to the unmanned aerial vehicle, and the control terminal of the unmanned aerial vehicle may send a control instruction to the unmanned aerial vehicle through the wireless communication connection to control the unmanned aerial vehicle. The control terminal of the unmanned aerial vehicle includes one or more of a remote control, a smartphone, a tablet computer, and a wearable device. The method includes the following streps.

S101: During a process of tracking a target object by the unmanned aerial vehicle, obtain a distance between the target object and the unmanned aerial vehicle.

Specifically, as shown in FIG. 2, during a process of tracking a target object 202 by an unmanned aerial vehicle 201, the control apparatus may obtain a distance between the target object and the unmanned aerial vehicle. The distance may be an absolute distance d₁ between the target object and the unmanned aerial vehicle. In some cases, the distance may be a horizontal distance d₂ between the target object and the unmanned aerial vehicle.

As described above, the unmanned aerial vehicle can track the target object in different ways. For example, when the unmanned aerial vehicle uses a visual tracking method, the unmanned aerial vehicle includes a photographing apparatus, where the unmanned aerial vehicle tracks the target object based on an image acquired by the photographing apparatus and containing the target object. The obtaining a distance between the target object and the unmanned aerial vehicle includes: determining the distance based on the image. The control apparatus may obtain the image acquired by the photographing apparatus and containing the target object, determine a position of the target object in the image, determine a relative orientation between the target object and the unmanned aerial vehicle based on the position of the target object in the image, and determine the distance between the target object and the unmanned aerial vehicle based on the relative orientation and altitude information detected by an altitude sensor (such as a barometer, a binocular camera, or an ultrasonic sensor) of the unmanned aerial vehicle.

For another example, the unmanned aerial vehicle may track the target object by adjusting its flight position based on a position that is acquired by a satellite positioning apparatus and that is sent by a device (such as an electronic positioning tag apparatus or the control terminal of the unmanned aerial vehicle) carried by the target object and including the satellite positioning apparatus. The obtaining a distance between the target object and the unmanned aerial vehicle includes: obtaining a first position of the target object, where the first position is output by a satellite positioning apparatus carried by the target object; obtaining a second position of the unmanned aerial vehicle; and determining the distance based on the first position and the second position. The target object may carry the device including the satellite positioning apparatus, such as the electronic positioning tag apparatus or the control terminal of the unmanned aerial vehicle. The first position of the target object may be acquired by the satellite positioning apparatus (including, for example, at least one of a GPS receiver, a BeiDou satellite positioning receiver, a Galileo satellite positioning receiver, or a GLONASS satellite positioning receiver). The control apparatus may obtain the first position. When the control apparatus is provided on the unmanned aerial vehicle, the device including the satellite positioning apparatus may send the first position to the unmanned aerial vehicle in a wireless form, so that the control apparatus obtains the first position. The control apparatus may obtain the second position of the unmanned aerial vehicle, and the second position may be acquired by the satellite positioning apparatus of the unmanned aerial vehicle. The control apparatus determines the distance based on the first position and the second position. The first position and the second position may include at least longitude and latitude. Further, the target object may carry the control terminal of the unmanned aerial vehicle, and the control terminal includes the satellite positioning apparatus. The obtaining a first position of the target object includes: obtaining the first position sent by a control terminal of the unmanned aerial vehicle that is carried by the target object, where the control terminal includes the satellite positioning apparatus. The control apparatus may obtain the first position sent by the control terminal of the unmanned aerial vehicle.

S102: Control, when the distance is greater than a preset distance threshold, the unmanned aerial vehicle to stop tracking the target object.

Specifically, when the control apparatus for an unmanned aerial vehicle determines that the distance is greater than the preset distance threshold, the control apparatus for an unmanned aerial vehicle may control the unmanned aerial vehicle to stop tracking the target object, and the unmanned aerial vehicle does not continue to track the target object. The unmanned aerial vehicle may be controlled to track the target object in the following several ways.

In one implementation, the controlling the unmanned aerial vehicle to stop tracking the target object includes: controlling the unmanned aerial vehicle to hover at a current position. When the control apparatus determines that the control apparatus for an unmanned aerial vehicle determines that the distance is greater than the preset distance threshold, the control apparatus controls the unmanned aerial vehicle to hover at the current position.

In another implementation, the controlling the unmanned aerial vehicle to stop tracking the target object includes: controlling the unmanned aerial vehicle to land from a current position. When the control apparatus determines that the control apparatus for an unmanned aerial vehicle determines that the distance is greater than the preset distance threshold, the control apparatus controls the unmanned aerial vehicle to land from the current position.

The distance threshold may be a fixed value, and in some cases, the distance threshold may be a variable value. For example, the distance threshold may be determined based on a flight velocity of the unmanned aerial vehicle. The distance threshold may be specified by a flight regulatory authority. The distance threshold may be obtained by the control apparatus from a server of the flight regulatory authority. In some cases, the distance threshold may be determined based on the second position of the unmanned aerial vehicle. For example, the control apparatus may determine an administrative region in which the unmanned aerial vehicle is located based on the second position, and determine a distance threshold corresponding to the administrative region in which the unmanned aerial vehicle is located. The administrative region may be a country, or a region such as different states or provinces of a country.

In the control method for an unmanned aerial vehicle provided in this embodiment of the present invention, the distance between the target object and the unmanned aerial vehicle is obtained, and when the distance is greater than the preset distance threshold, the unmanned aerial vehicle is controlled to stop tracking the target object. In this way, the problem of a poor control accuracy of a flight position of the unmanned aerial vehicle caused by the unmanned aerial vehicle tracking the target object without accurately determining a relative position to the target object can be effectively prevented, which can improve the flight safety of the unmanned aerial vehicle in tracking the target object, and prevent the occurrence of a flight accident.

In some embodiments, the method further includes: when the distance is less than or equal to the preset distance threshold, controlling the unmanned aerial vehicle to continue tracking the target object. As described above, during the process of tracking the target object by the unmanned aerial vehicle, the control apparatus obtains the distance between the target object and the unmanned aerial vehicle. When the control apparatus determines that the distance is less than or equal to the preset distance threshold, the unmanned aerial vehicle is controlled to continue tracking the target object.

In some embodiments, the method further includes: recording information associated with the stopping of tracking, where the associated information includes at least one of a time at which tracking is stopped, a distance between the unmanned aerial vehicle and the target object when tracking is stopped, a position of the unmanned aerial vehicle when tracking is stopped, and an image acquired by a photographing apparatus of the unmanned aerial vehicle when tracking is stopped. When the distance between the target object and the unmanned aerial vehicle is greater than the distance threshold, there is a risk that the unmanned aerial vehicle may have a flight safety accident. Therefore, it is necessary to record information related to the stopping of tracking by the unmanned aerial vehicle. The related information may be used for a flight safety accident appraisal. The associated information includes at least one of a time at which tracking is stopped, a distance between the unmanned aerial vehicle and the target object when tracking is stopped, a position of the unmanned aerial vehicle when tracking is stopped, and an image acquired by a photographing apparatus of the unmanned aerial vehicle when tracking is stopped. The control apparatus may record the information associated with the stopping of tracking. If the unmanned aerial vehicle includes the control apparatus, recording, by the control apparatus, the information associated with the stopping of tracking may include: recording, by the control apparatus, the information associated with the stopping of tracking in a local storage apparatus of the unmanned aerial vehicle, or sending, by the control apparatus, the information associated with the stopping of tracking to the control terminal of the unmanned aerial vehicle through the wireless communication connection between the unmanned aerial vehicle and the unmanned aerial vehicle, so that the control terminal records the information associated with the stopping of tracking in a local storage apparatus, or so that the control terminal uploads the information associated with the stopping of tracking to a server.

In some embodiments, the method further includes: sending notification information to stop tracking to the control terminal of the unmanned aerial vehicle. If the unmanned aerial vehicle includes the control apparatus, in response to the distance being greater than the preset distance threshold, the control apparatus may send the notification information to stop tracking to the control terminal of the unmanned aerial vehicle through the wireless communication connection between the control terminal and the unmanned aerial vehicle, so that the control terminal of the unmanned aerial vehicle outputs a notification prompt to stop tracking that corresponds to the notification information according to the notification information. The control terminal may display the notification prompt according to the notification information, and the notification prompt may also be a sound prompt.

In some embodiments, the method further includes: displaying the notification prompt to stop tracking. If the unmanned aerial vehicle includes the control apparatus, in response to the distance being greater than the preset distance threshold, the control apparatus may display the notification prompt to stop tracking.

In some embodiments, the method further includes: after tracking of the target object is stopped, if the distance is greater than the distance threshold, making no response to an obtained instruction to resume tracking the target object. Specifically, after the unmanned aerial vehicle is controlled to stop tracking the target object, a user may want the unmanned aerial vehicle to resume tracking the target object. However, when the distance between the target object and the unmanned aerial vehicle is greater than the distance threshold, resuming tracking of the target object by the unmanned aerial vehicle may lead to a flight accident. To improve the flight safety, after tracking of the target object is stopped, the control apparatus may continue obtaining the distance between the unmanned aerial vehicle and the target object. If the distance is greater than the distance threshold, the control apparatus makes no response to the obtained instruction to resume tracking the target object, so that the unmanned aerial vehicle does not resume tracking the target object. The instruction to resume tracking the target object is generated upon detection of the user's operation to resume tracking. In some cases, the instruction to resume tracking the target object is generated upon detection, by the control terminal of the unmanned aerial vehicle, of an operation to resume tracking that is input by the user to the control terminal. If the control apparatus is provided in the unmanned aerial vehicle, the control terminal may send the generated instruction to resume tracking the target object to the unmanned aerial vehicle, and the control terminal makes no response to the obtained instruction to resume tracking the target object. In some cases, the instruction to resume tracking the target object may be generated upon detection, by the control apparatus, of the user's gesture to resume tracking. If the control apparatus is provided in the control terminal of the unmanned aerial vehicle, the control apparatus may make no response to the instruction to resume tracking the target object that is obtained upon detection of a target resumption operation by an interactive apparatus of the control terminal. The interactive apparatus may include at least one of a joystick, a button, or a touchscreen.

In some embodiments, the method further includes: after tracking of the target object is stopped, if the distance is less than or equal to the distance threshold and the instruction to resume tracking the target object is obtained, controlling the unmanned aerial vehicle to resume tracking the target object. Specifically, after the unmanned aerial vehicle is controlled to stop tracking the target object, the user may want the unmanned aerial vehicle to resume tracking the target object, and the control apparatus may continue obtaining the distance between the unmanned aerial vehicle and the target object. When the distance between the target object and the unmanned aerial vehicle is less than or equal to the distance threshold, the control apparatus may respond to the obtained instruction to resume tracking the target object and control the unmanned aerial vehicle to resume tracking the target object. For the instruction to resume tracking the target object, refer to the foregoing description.

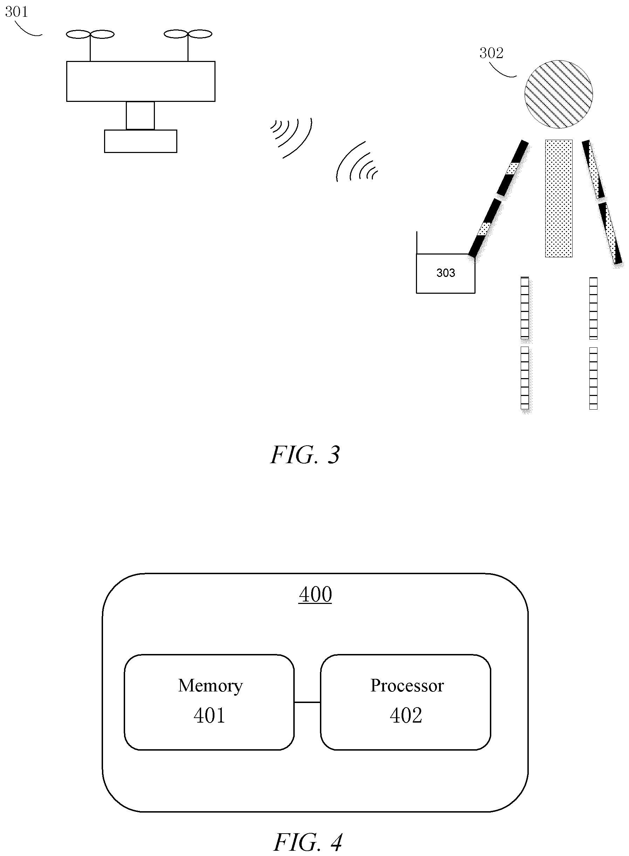

In some embodiments, the method further includes: determining whether the target object carries a control terminal of the unmanned aerial vehicle, where the controlling, when the distance is greater than a preset distance threshold, the unmanned aerial vehicle to stop tracking the target object includes: controlling, when the distance is greater than the distance threshold and the target object carries the control terminal, the unmanned aerial vehicle to stop tracking the target object. Specifically, the control apparatus may determine whether the target object carries the control terminal of the unmanned aerial vehicle. As shown in FIG. 3, in general cases, during a process of tracking a target object 302 by an unmanned aerial vehicle 301, a control terminal 303 of the unmanned aerial vehicle is usually carried by a user of the unmanned aerial vehicle. If it is determined that the target object carries the unmanned aerial vehicle, it can generally be determined that the target object is the user of the unmanned aerial vehicle, that is, the user of the unmanned aerial vehicle is the tracked target object. In this case, the tracked target object usually focuses on its own movement and often neglects a tracking status of the unmanned aerial vehicle. However, the control terminal capable of controlling the unmanned aerial vehicle may be carried by a user who neglects the tracking status of the unmanned aerial vehicle, which may lead to a flight safety accident. Therefore, when the control apparatus determines that the distance is greater than the distance threshold and the target object carries the control terminal, the unmanned aerial vehicle is controlled to stop tracking the target object.

In some embodiments, the method further includes: controlling, when the distance is greater than the distance threshold and the target object does not carry the control terminal, the unmanned aerial vehicle to continue tracking the target object. Specifically, as described above, the control apparatus may determine whether the target object carries the control terminal of the unmanned aerial vehicle. When it is determined that the target object does not carry the control terminal, it may generally be considered that the target object is not the user of the unmanned aerial vehicle who carries the control terminal of the unmanned aerial vehicle. The user of the unmanned aerial vehicle can take over the unmanned aerial vehicle through the control terminal at any time. In this case, restrictions on tracking of the target object by the unmanned aerial vehicle can be appropriately relaxed. Therefore, when the control apparatus determines that the distance is greater than the distance threshold and the target object does not carry the control terminal, the unmanned aerial vehicle is controlled to continue tracking the target object.

In some embodiments, the method further includes: determining whether the target object carries a control terminal of the unmanned aerial vehicle, where the controlling, when the distance is greater than a preset distance threshold, the unmanned aerial vehicle to stop tracking the target object includes: controlling, when the distance is greater than the distance threshold and the target object does not carry the control terminal, the unmanned aerial vehicle to stop tracking the target object. Specifically, as described above, the control apparatus may determine whether the target object carries the control terminal of the unmanned aerial vehicle. In general cases, the control terminal of the unmanned aerial vehicle is usually carried by the user of the unmanned aerial vehicle. If it is determined that the target object carries the unmanned aerial vehicle, it can generally be determined that the target object is the user of the unmanned aerial vehicle, that is, the user of the unmanned aerial vehicle is the tracked target object. When the target object does not carry the control terminal, it can be considered that the target object is not the user of the unmanned aerial vehicle. In some scenarios, it may be desirable to impose stricter restrictions on the unmanned aerial vehicle tracking the target object that does not carry the control terminal of the unmanned aerial vehicle, because the target object in this case may be objects that are not suitable for tracking (such as objects that are moving too fast or that have unclear textures). Therefore, when the control apparatus determines that the distance is greater than the distance threshold and the target object does not carry the control terminal, the unmanned aerial vehicle is controlled to stop tracking the target object.

In some embodiments, the method further includes: controlling, when the distance is greater than the distance threshold and the target object carries the control terminal, the unmanned aerial vehicle to continue tracking the target object. Specifically, as described above, when it is determined that the target object carries the control terminal, it can generally be considered that the target object is the user of the unmanned aerial vehicle who carries the control terminal of the unmanned aerial vehicle, and the user is an object that is suitable for tracking. In this case, restrictions on tracking of the target object by the unmanned aerial vehicle can be appropriately relaxed. Therefore, when the control apparatus determines that the distance is greater than the distance threshold and the target object carries the control terminal, the unmanned aerial vehicle is controlled to continue tracking the target obj ect.

In some embodiments, the unmanned aerial vehicle tracks the target object based on an image acquired by a photographing apparatus of the unmanned aerial vehicle, and the determining whether the target object carries a control terminal of the unmanned aerial vehicle includes: obtaining a third position of the control terminal; determining a first position of the target object based on the image; and determining, based on the first position and the third position, whether the target object carries the control terminal of the unmanned aerial vehicle.

Specifically, the third position of the control terminal may be acquired by a satellite positioning apparatus of the control terminal. It may be understood that when the target object carries the control terminal including the satellite positioning apparatus, the first position of the target object obtained as described above may be the third position of the control terminal. As described above, the control apparatus may determine the first position of the target object based on the image acquired by the photographing apparatus, and the control apparatus may determine, based on the first position and the third position, whether the target object carries the control terminal of the unmanned aerial vehicle. Determining, based on the first position and the third position, whether the target object carries the control terminal of the unmanned aerial vehicle may be implemented in the following several ways (not limited to the following several ways).

In one feasible way, a distance between the first position and the third position is determined based on the first position and the third position, and the distance is determined to determine whether the target object carries the control terminal of the unmanned aerial vehicle. For example, when the distance is less than or equal to a preset distance deviation threshold, it is determined that the target object carries the control terminal of the unmanned aerial vehicle. When the distance is greater than the preset distance deviation threshold, it is determined that the target object does not carry the control terminal of the unmanned aerial vehicle. For another example, distances between the first position and the third position at a plurality of moments may be determined based on the first position and the third position at the plurality of moments, and a mean or median of the distances at the plurality of moments may be obtained. When the mean or median is less than or equal to the preset distance deviation threshold, it is determined that the target object carries the control terminal of the unmanned aerial vehicle. When the mean or median is greater than the preset distance deviation threshold, it is determined that the target object does not carry the control terminal of the unmanned aerial vehicle.

In one feasible way, a velocity of the control terminal is determined based on the third position, a velocity of the target object is determined based on the first position, a velocity deviation (including a velocity direction deviation and/or a velocity magnitude deviation) between the velocity of the control terminal and the velocity of the target object is determined, and whether the target object carries the control terminal of the unmanned aerial vehicle is determined based on the velocity deviation. For example, when the velocity deviation is less than or equal to a preset velocity deviation threshold (including a velocity direction deviation threshold and/or a velocity magnitude deviation threshold), it is determined that the target object carries the control terminal of the unmanned aerial vehicle. When the velocity deviation is greater than the preset velocity deviation threshold, it is determined that the target object does not carry the control terminal of the unmanned aerial vehicle. For another example, the velocity of the control terminal and the velocity of the target object at a plurality of moments may be respectively determined based on the first position and the third position at the plurality of moments, velocity deviations at the plurality of moments may be obtained based on the velocity of the control terminal and the velocity of the target object at the plurality of moments, and an average velocity deviation or a median velocity deviation of the velocity deviations at the plurality of moments may be obtained. When the average velocity deviation or the median velocity deviation is less than or equal to the preset velocity deviation threshold, it is determined that the target object carries the control terminal of the unmanned aerial vehicle. When the average velocity deviation or the median velocity deviation is greater than the preset velocity deviation threshold, it is determined that the target object does not carry the control terminal of the unmanned aerial vehicle.

In some embodiments, the unmanned aerial vehicle tracks the target object based on an image acquired by a photographing apparatus of the unmanned aerial vehicle, and the determining whether the target object carries a control terminal of the unmanned aerial vehicle includes: obtaining an image acquired by a photographing apparatus of the unmanned aerial vehicle; determining an image area of the target object in the image; determining an image area of the control terminal of the unmanned aerial vehicle; and determining, based on the image area of the target object and the image area of the control terminal of the unmanned aerial vehicle, whether the target object carries the control terminal of the unmanned aerial vehicle. Specifically, the control apparatus may obtain the image acquired by the photographing apparatus, and perform recognition on the image to obtain the image area of the target object and the image area of the control terminal of the unmanned aerial vehicle in the image. In some cases, recognition may be performed on the image during the process of tracking the target object, to obtain the image area of the target object and the image area of the control terminal of the unmanned aerial vehicle in the image. In some cases, recognition may be performed on the image upon obtaining of a start tracking instruction, to obtain the image area of the target object and the image area of the control terminal of the unmanned aerial vehicle in the image. The target object may be selected by the user by performing a target object selection operation on the interactive apparatus (such as a touchscreen) of the control terminal that displays the image acquired by the unmanned aerial vehicle. Ways of determining, based on the image area of the target object and the image area of the control terminal of the unmanned aerial vehicle, whether the target object carries the control terminal of the unmanned aerial vehicle are illustratively described below.

In one possible way, a pixel distance in the image between the image area of the target object and the image area of the control terminal is determined based on the image area of the target object and the image area of the control terminal. When the pixel distance is less than or equal to a preset pixel distance threshold, it is determined that the target object carries the control terminal; otherwise, it is determined that the target object does not carry the control terminal. Specifically, when the target object carries the control terminal of the unmanned aerial vehicle, the target object is relatively close to the control terminal of the unmanned aerial vehicle, which means that the pixel distance in the image between the image area of the target object and the image area of the control terminal should also be relatively small. Therefore, the pixel distance in the image between the image area of the target object and the image area of the control terminal is determined based on a position in the image of the image area of the target object and a position in the image of the image area of the control terminal. When the pixel distance is less than or equal to the preset pixel distance threshold, it is determined that the target object carries the control terminal; otherwise, it is determined that the target object does not carry the control terminal.

In another possible way, it is determined whether the image area of the target object and the image area of the control terminal overlap. When the image areas overlap, it is determined that the target object carries the control terminal; otherwise, it is determined that the target object does not carry the control terminal. Specifically, when the target object carries the control terminal of the unmanned aerial vehicle, the target object is relatively close to the control terminal of the unmanned aerial vehicle, which means that in the image, the image area of the target object and the image area of the control terminal should partially overlap. Therefore, it may be determined whether the image area of the target object and the image area of the control terminal overlap, that is, whether there is an overlapping image area between the image area of the target object and the image area of the control terminal. When it is determined that the image areas overlap, it may be determined that the target object carries the control terminal; otherwise, it is determined that the target object does not carry the control terminal.

Further, the determining whether the image area of the target object and the image area of the control terminal overlap includes: determining whether the image area of the control terminal is located within the image area of the target object. If yes, it is determined that the target object carries the control terminal; otherwise, it is determined that the target object does not carry the control terminal. Specifically, the control terminal should be relatively small relative to the target object. When the target object carries the control terminal, the image area of the control terminal in the image is very likely to be located in the image area of the target object. Therefore, it is determined whether the image area of the control terminal is located within the image area of the target object. If yes, it is determined that the target object carries the control terminal; otherwise, it is determined that the target object does not carry the control terminal.

In some embodiments, the method may further include: in response to a start tracking instruction, obtaining the distance between the target object and the unmanned aerial vehicle; and when the distance is greater than the preset distance threshold, rejecting controlling the unmanned aerial vehicle to track the target object; or when the distance is less than or equal to the preset distance threshold, controlling the unmanned aerial vehicle to start tracking the target object. Specifically, after the control apparatus obtains the start tracking instruction, the distance between the target object and the unmanned aerial vehicle may be obtained in response to the start tracking instruction. When the distance is greater than the preset distance threshold, a flight safety accident may occur, and the control apparatus may reject controlling the unmanned aerial vehicle to track the target object. When the distance is less than or equal to the preset distance threshold, it may be considered that safety conditions are met, and the control apparatus may control the unmanned aerial vehicle to start tracking the target object. Further, when the control apparatus is provided on the unmanned aerial vehicle, the control apparatus may send notification information to reject tracking to the control terminal of the unmanned aerial vehicle, so that the control terminal displays a prompt notification to reject tracking based on the notification information to reject tracking.

As shown in FIG. 4, an embodiment of the present invention further provides a control apparatus 400 for an unmanned aerial vehicle, the control apparatus including a memory 401 and a processor 402.

The memory 401 is configured to store program code.

The processor 402 is configured to call and execute the program code to perform the following steps:
during a process of tracking a target object by the unmanned aerial vehicle, obtaining a distance between the target object and the unmanned aerial vehicle; and
controlling, when the distance is greater than a preset distance threshold, the unmanned aerial vehicle to stop tracking the target object.

In some embodiments, the distance is a horizontal distance between the unmanned aerial vehicle and the target object.

In some embodiments, the processor is further configured to:
when the distance is less than or equal to the preset distance threshold, control the unmanned aerial vehicle to continue tracking the target object.

In some embodiments, the processor is further configured to:
record information associated with the stopping of tracking, where the associated information includes at least one of a time at which tracking is stopped, a distance between the unmanned aerial vehicle and the target object when tracking is stopped, a position of the unmanned aerial vehicle when tracking is stopped, and an image acquired by a photographing apparatus of the unmanned aerial vehicle when tracking is stopped.

In some embodiments, the distance threshold is specified by a flight regulatory authority.

In some embodiments, the unmanned aerial vehicle includes a photographing apparatus, where the unmanned aerial vehicle tracks the target object based on an image acquired by the photographing apparatus and containing the target object; and the processor is specifically configured to:
determine the distance based on the image.

In some embodiments, the processor is specifically configured to:
obtain a first position of the target object, where the first position is output by a satellite positioning apparatus carried by the target object;
obtain a second position of the unmanned aerial vehicle; and
determine the distance based on the first position and the second position.

In some embodiments, the processor is specifically configured to:
obtain the first position sent by a control terminal of the unmanned aerial vehicle that is carried by the target object, where the control terminal includes the satellite positioning apparatus.

In some embodiments, the processor is further configured to:
send notification information to stop tracking to the control terminal of the unmanned aerial vehicle.

In some embodiments, the processor is further configured to:
after tracking of the target object is stopped, if the distance is greater than the distance threshold, make no response to an obtained instruction to resume tracking the target object.

In some embodiments, the processor is further configured to:
after tracking of the target object is stopped, if the distance is less than or equal to the distance threshold and the instruction to resume tracking the target object is obtained, control the unmanned aerial vehicle to resume tracking the target object.

In some embodiments, the processor is specifically configured to:
control the unmanned aerial vehicle to hover at a current position.

In some embodiments, the processor is specifically configured to:
control the unmanned aerial vehicle to land from a current position.

In some embodiments, the processor is further configured to:
determine whether the target object carries a control terminal of the unmanned aerial vehicle, where
the processor is specifically configured to:
   control, when the distance is greater than the distance threshold and the target object carries the control terminal, the unmanned aerial vehicle to stop tracking the target object.

In some embodiments, the processor is further configured to:
control, when the distance is greater than the distance threshold and the target object does not carry the control terminal, the unmanned aerial vehicle to continue tracking the target object.

In some embodiments, the unmanned aerial vehicle tracks the target object based on an image acquired by a photographing apparatus of the unmanned aerial vehicle, and the processor is specifically configured to:
obtain a third position of the control terminal, where the third position of the control terminal is acquired by a satellite positioning apparatus of the control terminal;
determine a first position of the target object based on the image; and
determine, based on the first position and the third position, whether the target object carries the control terminal of the unmanned aerial vehicle.

In some embodiments, the processor is specifically configured to:
obtain an image acquired by a photographing apparatus of the unmanned aerial vehicle;
determine an image area of the target object in the image;
determine an image area of the control terminal of the unmanned aerial vehicle in the image; and
determine, based on the image area of the target object and the image area of the control terminal of the unmanned aerial vehicle, whether the target object carries the control terminal of the unmanned aerial vehicle.

In some embodiments, the processor is specifically configured to:
determine a pixel distance between the image area of the target object and the image area of the control terminal; and
when the pixel distance is greater than a preset pixel distance threshold, determine that the target object does not carry the control terminal.

In some embodiments, the processor is specifically configured to:
when the pixel distance is less than or equal to the preset pixel distance threshold, determine that the target object carries the control terminal.

In some embodiments, the processor is specifically configured to:
determine whether the image area of the target object and the image area of the control terminal overlap; and
when it is determined that the image areas overlap, determine that the target object carries the control terminal.

In some embodiments, the processor is specifically configured to:
when it is determined that the image area of the target object does not overlap the image area of the control terminal, determine that the target object does not carry the control terminal.

In some embodiments, the processor is further configured to:
in response to a start tracking instruction, obtain the distance between the target object and the unmanned aerial vehicle; and
when the distance is greater than the preset distance threshold, reject controlling the unmanned aerial vehicle to track the target object.

In some embodiments, the processor is further configured to:
when the distance is less than or equal to the preset distance threshold, control the unmanned aerial vehicle to start tracking the target object.

In some embodiments, the processor is further configured to:
send notification information to reject tracking to the control terminal of the unmanned aerial vehicle.

The control apparatus 400 may perform the control method for an unmanned aerial vehicle as described above. For details, refer to the previous section.

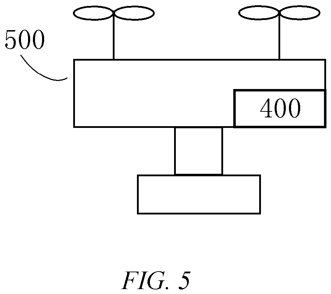

As shown in FIG. 5, an embodiment of the present invention further provides an unmanned aerial vehicle 500, including the control apparatus 400 as described above. The unmanned aerial vehicle may further include a power system for providing flight power for the unmanned aerial vehicle, and the photographing apparatus and the satellite positioning apparatus as described above.

An embodiment of the present invention further provides a control terminal of an unmanned aerial vehicle, the control terminal including the control apparatus 400 as described above. The control terminal may further include the interactive apparatus and satellite positioning as described above.

The technical solutions and technical features in the above embodiments can be used alone or in combination if they conflict with the present application. As long as they do not exceed the cognitive scope of those skilled in the art, they all belong to equivalent embodiments within the scope of protection of the present application.

In the several embodiments provided in the present invention, it should be understood that the related remote control apparatus and method disclosed may be implemented in other ways. For example, the remote control apparatus embodiment described above is merely illustrative. For example, the division into the modules or units is merely a logical function division and may be another division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, remote control apparatuses, or units, and may be in electrical, mechanical, or other forms.

The units described as separate parts may be or may not be physically separate, and parts displayed as units may be or may not be physical units, and may be located in one place or may be distributed on a plurality of network units. Some of or all the units may be chosen to implement the object of the solution of the embodiment according to actual needs.

In addition, the functional units in the embodiments of the present invention may be integrated into a processing unit, or the units singly exist physically, or two or more units are integrated into one unit. The integrated unit may be implemented in the form of hardware or may be implemented in the form of a software functional unit.

Where implemented in the form of software functional unit and sold or used as an independent product, the integrated unit may be stored in a computer-readable storage medium. Based on this understanding, the part of the technical solutions of the present invention which substantially contributes to the present invention over the prior art or all or part of the technical solutions may be embodied in a form of a computer software product, and the computer software product is stored in a storage medium, including various instructions for causing a computer processor to execute all or some of the steps of the method of individual embodiments of the present invention. The aforementioned storage medium includes: any medium that is capable of storing program codes, such as a U-disk, a removable hard disk, a read-only memory (ROM, Read-Only Memory), a random access memory (RAM, Random Access Memory), a magnetic disk or an optical disk.

The description above is merely some embodiments of the present invention and is not intended to limit the patent scope of the present invention, and any transformation to equivalent structures or equivalent procedures made using the contents of the description and the accompanying drawings of the present invention or applied in other relevant technical fields directly or indirectly should likewise be similarly encompassed in the scope of the patent protection of the present invention.

Finally, it should be noted that, the foregoing embodiments are only intended to illustrate rather than limit the technical solutions of the present invention. Although the present invention has been described in detail with reference to the foregoing embodiments, those of ordinary skill in the art should understand that, the technical solutions in the foregoing embodiments can be modified, or some or all of the technical features can be equivalently replaced. These modifications or replacements do not make the essence of the corresponding technical solutions depart from the scope of the technical solutions of the embodiments of the present invention.

## Claims

1. A control method for an unmanned aerial vehicle, the method comprising:
during a process of tracking a target object by the unmanned aerial vehicle, obtaining a distance between the target object and the unmanned aerial vehicle; and
controlling, when the distance is greater than a preset distance threshold, the unmanned aerial vehicle to stop tracking the target object.

2. The method according to claim 1, wherein the distance is a horizontal distance between the unmanned aerial vehicle and the target object.

3. The method according to claim 1, further comprising:
when the distance is less than or equal to the preset distance threshold, controlling the unmanned aerial vehicle to continue tracking the target object.

4. The method according to claim 1, further comprising:
recording information associated with the stopping of tracking, wherein the associated information comprises at least one of a time at which tracking is stopped, a distance between the unmanned aerial vehicle and the target object when tracking is stopped, a position of the unmanned aerial vehicle when tracking is stopped, and an image acquired by a photographing apparatus of the unmanned aerial vehicle when tracking is stopped.

5. The method according to claim 1, wherein the distance threshold is specified by a flight regulatory authority.

6. The method according to claim 1, wherein the unmanned aerial vehicle comprises a photographing apparatus, wherein the unmanned aerial vehicle tracks the target object based on an image acquired by the photographing apparatus and containing the target object; and
the obtaining a distance between the target object and the unmanned aerial vehicle comprises:
determining the distance based on the image.

7. The method according to claim 1, wherein the obtaining a distance between the target object and the unmanned aerial vehicle comprises:
obtaining a first position of the target object, wherein the first position is output by a satellite positioning apparatus carried by the target object;
obtaining a second position of the unmanned aerial vehicle; and
determining the distance based on the first position and the second position.

8. The method according to claim 7, wherein the obtaining a first position of the target object comprises:
obtaining the first position sent by a control terminal of the unmanned aerial vehicle that is carried by the target object, wherein the control terminal comprises the satellite positioning apparatus.

9. The method according to claim 1, further comprising:
sending notification information to stop tracking to the control terminal of the unmanned aerial vehicle.

10. The method according to claim 1, further comprising:
after tracking of the target object is stopped, if the distance is greater than the distance threshold, making no response to an obtained instruction to resume tracking the target object.

11. The method according to claim 10, further comprising:
after tracking of the target object is stopped, if the distance is less than or equal to the distance threshold and the instruction to resume tracking the target object is obtained, controlling the unmanned aerial vehicle to resume tracking the target obj ect.

12. The method according to claim 1, wherein the controlling the unmanned aerial vehicle to stop tracking the target object comprises:
controlling the unmanned aerial vehicle to hover at a current position.

13. The method according to claim 1, wherein the controlling the unmanned aerial vehicle to stop tracking the target object comprises:
controlling the unmanned aerial vehicle to land from a current position.

14. The method according to claim 1, further comprising:
determining whether the target object carries a control terminal of the unmanned aerial vehicle, wherein
the controlling, when the distance is greater than a preset distance threshold, the unmanned aerial vehicle to stop tracking the target object comprises:
controlling, when the distance is greater than the distance threshold and the target object carries the control terminal, the unmanned aerial vehicle to stop tracking the target object.

15. The method according to claim 14, further comprising:
controlling, when the distance is greater than the distance threshold and the target object does not carry the control terminal, the unmanned aerial vehicle to continue tracking the target object.

16. The method according to claim 14 or 15, wherein the unmanned aerial vehicle tracks the target object based on an image acquired by a photographing apparatus of the unmanned aerial vehicle, wherein
the determining whether the target object carries a control terminal of the unmanned aerial vehicle comprises:
obtaining a third position of the control terminal, wherein the third position of the control terminal is acquired by a satellite positioning apparatus of the control terminal;
determining a first position of the target object based on the image; and
determining, based on the first position and the third position, whether the target object carries the control terminal of the unmanned aerial vehicle.

17. The method according to claim 14, wherein the determining whether the target object carries a control terminal of the unmanned aerial vehicle comprises:
obtaining an image acquired by a photographing apparatus of the unmanned aerial vehicle;
determining an image area of the target object in the image;
determining an image area of the control terminal of the unmanned aerial vehicle in the image; and
determining, based on the image area of the target object and the image area of the control terminal of the unmanned aerial vehicle, whether the target object carries the control terminal of the unmanned aerial vehicle.

18. The method according to claim 17, wherein the determining, based on the image area of the target object and the image area of the control terminal of the unmanned aerial vehicle, whether the target object carries the control terminal of the unmanned aerial vehicle comprises:
determining a pixel distance between the image area of the target object and the image area of the control terminal; and
when the pixel distance is greater than a preset pixel distance threshold, determining that the target object does not carry the control terminal.

19. The method according to claim 18, wherein the determining, based on the image area of the target object and the image area of the control terminal of the unmanned aerial vehicle, whether the target object carries the control terminal of the unmanned aerial vehicle comprises:
when the pixel distance is less than or equal to the preset pixel distance threshold, determining that the target object carries the control terminal.

20. The method according to claim 17, wherein the determining, based on the image area of the target object and the image area of the control terminal of the unmanned aerial vehicle, whether the target object carries the control terminal of the unmanned aerial vehicle comprises:
determining whether the image area of the target object and the image area of the control terminal overlap; and
when it is determined that the image areas overlap, determining that the target object carries the control terminal.

21. The method according to claim 20, wherein the determining, based on the image area of the target object and the image area of the control terminal of the unmanned aerial vehicle, whether the target object carries the control terminal of the unmanned aerial vehicle comprises:
when it is determined that the image area of the target object does not overlap the image area of the control terminal, determining that the target object does not carry the control terminal.

22. The method according to any one of claims 1 to 21, further comprising:
in response to a start tracking instruction, obtaining the distance between the target object and the unmanned aerial vehicle; and
when the distance is greater than the preset distance threshold, rejecting controlling the unmanned aerial vehicle to track the target object.

23. The method according to claim 22, further comprising:
when the distance is less than or equal to the preset distance threshold, controlling the unmanned aerial vehicle to start tracking the target object.

24. The method according to claim 22 or 23, further comprising:
sending notification information to reject tracking to the control terminal of the unmanned aerial vehicle.

25. A control apparatus for an unmanned aerial vehicle, the control apparatus comprising a memory and a processor, wherein
the memory is configured to store program code; and
the processor is configured to call and execute the program code to perform the following steps:
during a process of tracking a target object by the unmanned aerial vehicle, obtaining a distance between the target object and the unmanned aerial vehicle; and
controlling, when the distance is greater than a preset distance threshold, the unmanned aerial vehicle to stop tracking the target object.

26. The control apparatus according to claim 25, wherein the distance is a horizontal distance between the unmanned aerial vehicle and the target object.

27. The control apparatus according to claim 25, wherein the processor is further configured to:
when the distance is less than or equal to the preset distance threshold, control the unmanned aerial vehicle to continue tracking the target object.

28. The control apparatus according to claim 25, wherein the processor is further configured to:
record information associated with the stopping of tracking, wherein the associated information comprises at least one of a time at which tracking is stopped, a distance between the unmanned aerial vehicle and the target object when tracking is stopped, a position of the unmanned aerial vehicle when tracking is stopped, and an image acquired by a photographing apparatus of the unmanned aerial vehicle when tracking is stopped.

29. The control apparatus according to claim 25, wherein the distance threshold is specified by a flight regulatory authority.

30. The control apparatus according to claim 25, wherein the unmanned aerial vehicle comprises a photographing apparatus, wherein the unmanned aerial vehicle tracks the target object based on an image acquired by the photographing apparatus and containing the target object; and the processor is specifically configured to:
determine the distance based on the image.

31. The control apparatus according to claim 25, wherein the processor is specifically configured to:
obtain a first position of the target object, wherein the first position is output by a satellite positioning apparatus carried by the target object;
obtain a second position of the unmanned aerial vehicle; and
determine the distance based on the first position and the second position.

32. The control apparatus according to claim 31, wherein the processor is specifically configured to:
obtain the first position sent by a control terminal of the unmanned aerial vehicle that is carried by the target object, wherein the control terminal comprises the satellite positioning apparatus.

33. The control apparatus according to claim 25, wherein the processor is further configured to:
send notification information to stop tracking to the control terminal of the unmanned aerial vehicle.

34. The control apparatus according to claim 25, wherein the processor is further configured to:
after tracking of the target object is stopped, if the distance is greater than the distance threshold, make no response to an obtained instruction to resume tracking the target object.

35. The control apparatus according to claim 34, wherein the processor is further configured to:
after tracking of the target object is stopped, if the distance is less than or equal to the distance threshold and the instruction to resume tracking the target object is obtained, control the unmanned aerial vehicle to resume tracking the target object.

36. The control apparatus according to claim 25, wherein the processor is specifically configured to:
control the unmanned aerial vehicle to hover at a current position.

37. The control apparatus according to claim 25, wherein the processor is specifically configured to:
control the unmanned aerial vehicle to land from a current position.

38. The control apparatus according to claim 25, wherein the processor is further configured to:
determine whether the target object carries a control terminal of the unmanned aerial vehicle, wherein
the processor is specifically configured to:
control, when the distance is greater than the distance threshold and the target object carries the control terminal, the unmanned aerial vehicle to stop tracking the target object.

39. The control apparatus according to claim 38, wherein the processor is further configured to:
control, when the distance is greater than the distance threshold and the target object does not carry the control terminal, the unmanned aerial vehicle to continue tracking the target object.

40. The control apparatus according to claim 38 or 39, wherein the unmanned aerial vehicle tracks the target object based on an image acquired by a photographing apparatus of the unmanned aerial vehicle, and the processor is specifically configured to:
obtain a third position of the control terminal, wherein the third position of the control terminal is acquired by a satellite positioning apparatus of the control terminal;
determine a first position of the target object based on the image; and
determine, based on the first position and the third position, whether the target object carries the control terminal of the unmanned aerial vehicle.

41. The control apparatus according to claim 38, wherein the processor is specifically configured to:
obtain an image acquired by a photographing apparatus of the unmanned aerial vehicle;
determine an image area of the target object in the image;
determine an image area of the control terminal of the unmanned aerial vehicle in the image; and
determine, based on the image area of the target object and the image area of the control terminal of the unmanned aerial vehicle, whether the target object carries the control terminal of the unmanned aerial vehicle.

42. The control apparatus according to claim 41, wherein the processor is specifically configured to:
determine a pixel distance between the image area of the target object and the image area of the control terminal; and
when the pixel distance is greater than a preset pixel distance threshold, determine that the target object does not carry the control terminal.

43. The control apparatus according to claim 42, wherein the processor is specifically configured to:
when the pixel distance is less than or equal to the preset pixel distance threshold, determine that the target object carries the control terminal.

44. The control apparatus according to claim 41, wherein the processor is specifically configured to:
determine whether the image area of the target object and the image area of the control terminal overlap; and
when it is determined that the image areas overlap, determine that the target object carries the control terminal.

45. The control apparatus according to claim 44, wherein the processor is specifically configured to:
when it is determined that the image area of the target object does not overlap the image area of the control terminal, determine that the target object does not carry the control terminal.

46. The control apparatus according to any one of claims 25 to 45, wherein the processor is further configured to:
in response to a start tracking instruction, obtain the distance between the target object and the unmanned aerial vehicle; and
when the distance is greater than the preset distance threshold, reject controlling the unmanned aerial vehicle to track the target object.

47. The control apparatus according to claim 46, wherein the processor is further configured to:
when the distance is less than or equal to the preset distance threshold, control the unmanned aerial vehicle to start tracking the target object.

48. The control apparatus according to claim 46 or 47, wherein the processor is further configured to:
send notification information to reject tracking to the control terminal of the unmanned aerial vehicle.

49. An unmanned aerial vehicle, comprising the control apparatus according to any one of claims 25 to 48.
